Europäisches Patentamt

European Patent Office

Office européen des brevets

(19)

(11) Veröffentlichungsnummer: **0 034 696**
**B1**

(12) **EUROPÄISCHE PATENTSCHRIFT**

(45) Veröffentlichungstag der Patentschrift:
09.05.84

(51) Int. Cl.³: **C 01 B 33/28**

(21) Anmeldenummer: 81100175.9

(22) Anmeldetag: 13.01.81

(54) Verfahren zur Herstellung von kristallinem Zeolithpulver des Typs A.

(30) Priorität: 26.02.80 DE 3007080

(43) Veröffentlichungstag der Anmeldung:
02.09.81 Patentblatt 81/35

(45) Bekanntmachung des Hinweises auf die Patenterteilung:
09.05.84 Patentblatt 84/19

(84) Benannte Vertragsstaaten:
AT BE CH DE FR GB IT LI NL SE

(56) Entgegenhaltungen:
DE - A - 2 651 437
DE - A - 2 651 485
DE - A - 2 704 310
DE - A - 2 734 296

SPRECHSAAL, Band 112, Nr. 12, 1979 F. WOLF et al. "Zur Synthese und Anwendung zeolithischer Molekularsiebe, Teil I: Synthese" Seiten 917 bis 922
MANUFACTURING CHEMIST & AEROSOL NEWS, Band 49, Nr. 10, 1978 M. ETTLINGER et al. "Synthetic Zeolites as New Builders for Detergents" Seiten 51 bis 66

.

(73) Patentinhaber: Degussa Aktiengesellschaft, Weissfrauenstrasse 9, D-6000 Frankfurt am Main 1 (DE)
Patentinhaber: Henkel Kommanditgesellschaft auf Aktien, Postfach 1100 Henkelstrasse 67, D-4000 Düsseldorf-Holthausen (DE)

(72) Erfinder: Strack, Hans,Dr., Siedlungsstrasse 26, D-8755 Alzenau (DE)

## Beschreibung

Die Erfindung betrifft ein Verfahren zur Herstellung von kristallinem Zeolithpulver des Typs A mit einem mittleren Teilchendurchmesser von 6,7 bis 8,0 µm.

Zeolith A ist ein kristallines Alkalialuminiumsilikat, dessen Zusammensetzung der Formel

$$1,0 \pm 0,2 \ M_{2/n}O:Al_2O_3:1,85 \pm 0,5 \ SiO_2 \cdot y \ H_2O$$

entspricht, wobei M ein Metallkation, n seine Wertigkeit und y ein Wert bis zu 6 bedeuten.

Zeolith A gewinnt in zunehmendem Masse an Bedeutung als Phosphatsubstitut in Waschmitteln. Für diesen Anwendungszweck ist es wünschenswert, dass das kristalline Zeolithpulver des Typs A eine möglichst einheitliche Teilchengrösse, d.h. eine möglichst enge Teilchengrössenverteilungskurve aufweist.

Die DE-A Nr. 2734296 beschreibt ein Verfahren zur Herstellung von feinteiligen, zum Kationenaustausch befähigten wasserunlöslichen Silikaten, mit einem beispielsweise zwischen 3 und 5 µm liegenden Maximum der Teilchengrössenverteilung. Das Verfahren wird derart durchgeführt, dass man Wasserglaslösung vorlegt und Natriumaluminatlösung hinzugibt. Anschliessend wird die Reaktionsmischung erhitzt.

Die DE-A Nr. 2704310 beschreibt ein Verfahren zur Herstellung von feinteiligen, zum Kationenaustausch befähigten Silikaten, bei dem man wässerig Alkalialuminatlauge mit wässeriger Alkalisilikatlösung in Gegenwart von überschüssigem Alkali vermischt und die Reaktionsmischung gegebenenfalls rezyklierend durch eine Zerkleinerungsvorrichtung führt.

Die DE-A 2651437 beschreibt ein Verfahren zur Herstellung eines kristallinen Zeolithpulvers des Typs A mit 50 Gew.-% unter höchstens 5,9 µm liegenden Teilchen. Dabei werden in eine Vorlage aus Wasser gleichzeitig Natriumaluminatlauge und Alkalisilikatlösung unter Rühren hinzugegeben. Die Mischung wird mit Wasser verdünnt, wonach anschliessend weitere Natriumaluminatlauge der gleichen Zusammensetzung und Wasser hinzugegeben wird. Die so erhaltene Synthesemischung wird bei einer Temperatur zwischen 20 und 175°C kristallisiert.

Gegenstand der Erfindung ist ein Verfahren zur Herstellung eines kristallinen Zeolithpulvers des Typs A mit einem Gritanteil (Teilchen > 45 µm nach Mocker) von < 0,025%, durch Umsetzung von Natriumaluminatlauge mit Wasserglas, welches dadurch gekennzeichnet ist, dass man zur Herstellung eines Zeolithpulvers mit einem mittleren Teilchendurchmesser von 6,7 bis 8,0 µm in eine Vorlage aus 8 bis 12 Volumenteilen Wasser gleichzeitig während eines Zeitraumes von 5 bis 15 min unter Rühren bei einer Temperatur von 30 bis 70°C 2 bis 8 Volumenteil Natriumaluminatlauge mit einer Konzentration von 50 bis 200, vorzugsweise 90 bis 150 g/l $Na_2O$ und 30 bis 150, vorzugsweise 100 bis 110 g/l $Al_2O_3$ sowie 0,6 bis 1,2 Volumenteil einer Wasserglaslösung mit einer Konzentration von 90 bis 120, vorzugsweise 100 bis 110 g/l $Na_2O$ und von 330 bis 380, vorzugsweise 340 bis 370 g/l $SiO_2$, welches gegebenenfalls mit 1,0 bis 1,5 Volumenteile Wasser verdünnt sein kann, hineingibt, einen Zeitraum von 10 bis 40 min rührt, anschliessend bei einer Temperatur von 30 bis 70°C während eines Zeitraumes von 5 bis 15 min weitere 2 bis 3 Volumenteile Wasserglaslösung derselben Konzentration hinzugibt, einen Zeitraum von 10 bis 40 min bei einer Temperatur von 30 bis 70°C rührt, anschliessend unter Rühren bei einer Temperatur von 30 bis 70°C weitere 16 bis 20 Volumenteile einer Natriumaluminatlauge derselben Konzentration während eines Zeitraumes von 5 bis 15 min hinzugibt, die Reaktionsmischung über einen Zeitraum von 20 bis 180 min bei einer Temperatur von 75 bis 100°C nachrührt, abkühlt und das kristalline Produkt abfiltriert und trocknet.

Das mittels dem erfindungsgemässen Verfahren hergestellte Zeolithpulver des Typs A weist einen mittleren Teilchendurchmesser von 6,7 bis 8,0 µm und einen Gritanteil von < 0,025% auf. Es kann vorteilhaft als Phosphatsubstitut in Waschmitteln eingesetzt werden.

Das erfindungsgemässe Verfahren wird anhand der folgenden Beispiele näher erläutert und beschrieben.

*Beispiel 1:*

In einem Reaktionsgefäss werden 10 l Wasser vorgelegt. Anschliessend werden gleichzeitig während eines Zeitraumes von 10 min bei einer Temperatur von 35°C unter Rühren 2 l Natriumaluminatlauge mit einer Konzentration von 135 g/l $Na_2O$ und 78 g/l $Al_2O_3$ und 1,2 l Wasserglaslösung mit einer Konzentration von 100 g/l $Na_2O$ und 349 g/l $SiO_2$ hineingegeben, anschliessend wird 30 min gerührt. Danach werden weitere 2,4 l Wasserglaslösung derselben Konzentration während eines Zeitraumes von 10 min bei einer Temperatur von 35°C hineingegeben. Es wird danach weitere 30 min gerührt und anschliessend werden unter Rühren bei einer Temperatur von 35°C weitere 18 l Natriumaluminatlauge derselben Konzentration während 10 min hinzugegeben. Die Reaktionsmischung wird noch weitere 50 min bei 98°C gerührt und abgekühlt.

Das kristalline Reaktionsprodukt wird abfiltriert und getrocknet.

Die Teilchenverteilungskurve wird mittels Coulter Counter bestimmt. Dabei ergeben sich die folgenden Werte:

50% > 8,0 µm
17% > 10 µm
4% > 15 µm

Der Gritgehalt (Teilchen > 45 µm) beträgt nach Mocker 0,024%. Das Calciumbindevermögen beträgt 148 mg CaO/g Zeolith.

*Beispiel 2:*

In einem Reaktionsgefäss werden 10 l Wasser vorgelegt. Anschliessend werden gleichzeitig

2

während eines Zeitraumes von 10 min bei einer Temperatur von 48°C unter Rühren 2 l Natriumaluminatlauge mit einer Konzentration von 145 g/l $Na_2O$ und 81 g/l $Al_2O_3$ und 0,6 l Wasserglaslösung mit einer Konzentration von 100 g/l $Na_2O$ und 349 g/l $SiO_2$, welche mit 1,4 l Wasser verdünnt ist, hineingegeben, anschliessend wird 30 min gerührt. Danach werden weitere 3,0 l Wasserglaslösung derselben Konzentration während eines Zeitraumes von 10 min bei einer Temperatur von 48°C hineingegeben. Es wird danach weitere 30 min gerührt, und anschliessend werden unter Rühren bei einer Temperatur von 48°C weitere 18 l Natriumaluminatlauge derselben Konzentration während 10 min hinzugegeben. Die Reaktionsmischung wird noch weitere 80 min bei einer Temperatur von 88°C gerührt und abgekühlt.

Das kristalline Reaktionsprodukt wird abfiltriert und getrocknet.

Die Teilchenverteilungskurve wird mittels Coulter Counter bestimmt. Dabei ergeben sich die folgenden Werte:

50% > 6,7 μm
12% > 10 μm
 4% > 15 μm

Der Gritgehalt (Teilchen > 45 μm) beträgt nach Mocker 0,018% und das Calciumbindevermögen 151 mg CaO/g Zeolith.


## Patentanspruch

Verfahren zur Herstellung eines kristallinen Zeolithpulvers des Typs A mit einem Gritanteil (Teilchen > 45 μm nach Mocker) von < 0,025%, durch Umsetzung von Natriumaluminatlauge mit Wasserglaslösung, dadurch gekennzeichnet, dass man zur Herstellung eines Zeolithpulvers mit einem mittleren Teilchendurchmesser von 6,7 bis 8,0 μm in eine Vorlage aus 8 bis 12 Volumenteilen Wasser gleichzeitig während eines Zeitraumes von 5 bis 15 min unter Rühren bei einer Temperatur von 30 bis 70°C 2 bis 8 Volumenteile Natriumaluminatlauge mit einer Konzentration von 50 bis 200 g/l $Na_2O$ und 30 bis 100 g/l $Al_2O_3$ sowie 0,6 bis 1,2 Volumenteile einer Wasserglaslösung mit einer Konzentration von 90 bis 120 g/l $Na_2O$ und von 330 bis 380 g/l $SiO_2$, welche gegebenenfalls mit 1,0 bis 1,5 Volumenteile Wasser verdünnt sein kann, hineingibt, einen Zeitraum von 10 bis 40 min rührt, anschliessend bei einer Temperatur von 38 bis 70°C während eines Zeitraumes von 5 bis 15 min weitere 2 bis 3 Volumenteile Wasserglaslösung derselben Konzentration hinzugibt, einen Zeitraum von 10 bis 40 min bei einer Temperatur von 30 bis 70°C rührt, anschliessend unter Rühren bei einer Temperatur von 30 bis 70°C weitere 16 bis 20 Volumenteile einer Natriumaluminatlauge derselben Konzentration während eines Zeitraumes von 5 bis 15 min hinzugibt, die Reaktionsmischung über einen Zeitraum von 20 bis 180 min bei einer Temperatur von 75 bis 100°C nachrührt, abkühlt und das kristalline Produkt abfiltriert und trocknet.


## Claim

A process for the production of a crystalline powder of the zeolite A type having a grit proportion (particles greater than 45 μm according to Mocker) of < 0.025%, by the reaction of sodium aluminate liquor with water glass solution, characterised in that for the production of a zeolite powder having an average particle diameter of from 6.7 to 8.0 μm, from 2 to 8 parts by volume of sodium aluminate liquor having a concentration of from 50 to 200 g/l of $Na_2O$, from 30 to 100 g/l of $Al_2O_3$, from 0.6 to 1.2 parts by volume of a water glass solution having a concentration of from 90 to 120 g/l of $Na_2O$ and from 330 to 380 g/l of $SiO_2$ which may optionally be diluted with from 1.0 to 1.5 parts by volume of water are simultaneously added to a starting solution of from 8 to 12 parts by volume of water over a period of from 5 to 15 min with stirring at a temperature of from 30 to 70°C, the mixture is stirred for 10 to 40 min, a further 2 to 3 parts by volume of water glass solution of the same concentration are then added at a temperature of from 38 to 70°C over a period of from 5 to 15 min, the mixture is stirred for 10 to 40 min at a temperature of from 30 to 70°C, a further 16 to 20 parts by volume of a sodium aluminate liquor of the same concentration are then added with stirring at a temperature of from 30 to 70°C over a period of from 5 to 15 min, the reaction mixture is then stirred for 20 to 180 min at a temperature of from 75 to 100°C, cooled and the crystalline product is filtered and dried.


## Revendication

Procédé pour la fabrication d'une zéolithe du type A en poudre cristalline par réaction d'une lessive d'aluminate de sodium avec une solution de silicate de sodium, comportant une proportion de grains (particules d'une dimension supérieure à 45 μm suivant Mocker) inférieure à 0,025%, procédé caractérisé en ce que, pour fabriquer une zéolithe en poudre ayant un diamètre moyen de particules de 6,7 à 8 μm, on introduit, dans une cuve de réaction où l'on a déposé 8 à 12 parties en volume d'eau, simultanément, en une durée de 5 à 10 min, tout en agitant, à une température de 30 à 70°C, 2 à 8 parties en volume de lessive d'aluminate de sodium ayant une concentration de 50 à 200 g/l de $Na_2O$ et 30 à 100 g/l d'$Al_2O_3$, ainsi que 0,6 à 1,2 partie en volume d'une solution de silicate de sodium ayant une concentration de 90 à 120 g/l $Na_2O$ et de 330 à 380 g/l $SiO_2$, éventuellement diluée avec 1 à 1,5 partie d'eau, on agite pendant une durée de 10 à 40 min, puis introduit, à une température de 38 à 70°C, en une durée de 5 à 15 min, 2 à 3 parties en volume de solution de silicate de sodium à la même concentration, on agite pendant une durée de 10 à 40 min à une température de 30 à 70°C, on introduit ensuite, en une durée de 5 à 15 min, tout en agitant, à une température de 30 à 70°C, à nouveau 16 à 20 parties en volume d'une lessive d'aluminate de sodium à la même concentration, on continue à agiter le mélange réactionnel pendant une durée de 20 à 180 min, à une température de 75 à 100°C, on refroidit, et on sépare le produit cristallin par filtration et on le sèche.